# EUROPÄISCHE PATENTANMELDUNG

(11) **EP 2 067 404 A1**
(43) Veröffentlichungstag der Anmeldung: **10.06.2009**
(21) Anmeldenummer: 08169816.9
(22) Anmeldetag: 24.11.2008
(51) Int. Cl.: A23B 7/16, A23B 7/04, A23L 1/212

(54) **Zitrussaftschläuche mit Aromazusatz**

(30) Priorität: 07.12.2007 US 12107 P
(71) Anmelder: Symrise GmbH & Co. KG, 37603 Holzminden (DE)
(72) Erfinder: Siegel, Sven, 37603, Holzminden (DE); Krammer, Gerhard, 37603, Holzminden (DE); Bertram, Heinz-Jürgen, 37603, Holzminden (DE); Barnard, Angela, 37603, Holzminden (DE)
(74) Vertreter: Eisenführ, Speiser & Partner

(57) **Zusammenfassung**

Beschrieben wird eine Mischung umfassend oder bestehend aus intakten, vereinzelten Zitrussaftschläuchen mit Aromazusatz, wobei diese Zitrussaftschläuche bezogen auf ihr Gesamtgewicht einen Aromagehalt von 50 ppm (0,005 Gew.-%) oder mehr besitzen.

## Beschreibung

Die vorliegende Erfindung betrifft Mischungen umfassend oder bestehend aus intakten, vereinzelten Zitrussaftschläuchen mit Aromazusatz, d.h. mit einem Zusatz von einem oder mehreren Aromen, die in den natürlichen Zitrussaftschläuchen nicht oder nur in einer geringeren Menge vorhanden sind. Zu weiteren Merkmalen einer erfindungsgemäßen Mischung siehe unten.

Die vorliegende Erfindung betrifft in weiteren Aspekten die Verwendung einer erfindungsgemäßen Mischung als (a) Mittel zur Aromatisierung von der Ernährung oder dem Genuss dienenden Zubereitungen oder Halbfertigwaren oder (b) entsprechende Halbfertigware oder (c) der Ernährung oder dem Genuss dienende Zubereitung.

Ein weiterer Aspekt der vorliegenden Erfindung betrifft Verfahren zur Herstellung einer erfindungsgemäßen Mischung.

Schließlich betrifft die vorliegende Erfindung auch die Verwendung einer Aromazubereitung als Mittel zur Erhöhung des Aromagehaltes des umhüllten Saftes eines Zitrussaftschlauches.

Die Herstellung von intakten, vereinzelten Zitrussaftschläuchen ist Gegenstand von US 3,246,993 und GB 978 418. Dabei werden die Früchte geschält und in eine kalte Flüssigkeit getaucht, die eine Temperatur von weniger als 100°F (-73 °C) besitzt. Diese Kälteschockbehandlung sowie die anschließende schnelle Erwärmung bewirken ein Zersplittern der Frucht. Die Saftschläuche bleiben intakt und lassen sich leicht durch Sieben oder andere Trennverfahren von den restlichen Bestandteilen trennen. Die Separierung der Saftschläuche kann durch Rühren beziehungsweise Bewegung der Früchte unterstützt werden, solange sie im gefrorenen Zustand vorliegen. Die vereinzelten Saftschläuche können zu einem Saft weiterverarbeitet werden. Die Trennung der Saftschläuche von den restlichen Fruchtbestandteilen bewirkt eine Qualitätserhöhung des Saftes. Die vereinzelten Schläuche können weiterhin im gefrorenen Zustand gelagert werden. Als kalte Flüssigkeiten werden flüssiger Stickstoff, verflüssigte Stickoxide, Kohlendioxid, Argon, Helium und flüssige Luft genannt.

JP 62000262 beschreibt einen Apparat zur Separierung der Saftschläuche von Zitrusfrüchten. Die Frucht wird in einem flüssigen Medium gefroren, durch Prall oder Schlag auseinander gebrochen und die vereinzelten Saftschläuche werden aussortiert.

US 4,294,861 offenbart ein Verfahren und eine Apparatur zur Gewinnung vereinzelter Saftschläuche. Die Zitrusfrüchte können ohne aufwändige Vorbehandlung verarbeitet werden. Nach der Halbierung der Früchte wird gegen die Schnittflächen ein Flüssigkeitsstrahl gerichtet. Die Pulpe wird herausgespült und zerfällt in die einzelnen Saftschläuche.

Ein weiteres Verfahren zur Herstellung vereinzelter Saftschläuche wird in US 4,560,572 offenbart. Nach einer Vorbehandlung, die das Schälen und das Vereinzeln in Segmente umfasst, werden die Früchte gegebenenfalls einem extra-gastrischen Abbau zugeführt. Die Segmente bzw. Cluster werden in einem speziell konstruierten Apparat in vereinzelte, unbeschädigte Saftschläuche überführt.

JP 57150373 beschreibt einen Apparat zur Vereinzelung von Saftschläuchen aus Zitrusfruchtsegmenten unter Verwendung eines zylindrischen Trennnetzes. Die Segmente werden in das zylindrische Trennnetz transportiert und dort mit einem Wasserstrahl behandelt. Hierbei werden die Segmente in die einzelnen Saftschläuche aufgetrennt. Die Saftschläuche durchwandern das Netz und werden in einem Wassertank gesammelt.

US 4,738,194 beschreibt einen Apparat zur Separierung der Saftschläuche von Zitrusfrüchten. Er umfasst eine Gefriereinheit, in der die Zitrusfrüchte mit einer kryogenen Flüssigkeit gefroren werden. In einem Brecher werden die gefrorenen Früchte zerstoßen und in einem Abscheider werden die vereinzelten Saftschläuche von den restlichen Bestandteilen der Zitrusfrüchte getrennt.

JP 58158153 beschreibt eine Methode zur Sortierung von Zitrussaftschläuchen und einen Apparat hierfür. In dem beschriebenen Prozess werden große Mengen unsortierter Saftschläuche von Zitrusfrüchten sortiert, indem Samen sowie unreife Schläuche aussortiert werden. Als Produkt erhält man entsprechende Saftschläuche zur Herstellung von Fruchtsaft.

Der Stand der Technik beschreibt jedoch nicht die Herstellung von intakten, vereinzelten Zitrussaftschläuchen mit einem hohen Aromagehalt und langer Haltbarkeit. Der Aromagehalt vereinzelter Zitrussaftschläuche beträgt natürlich üblicherweise nicht mehr als 15 ppm bezogen auf das Gesamtgewicht des Zitrussaftschlauches. Folglich ist es mit den aus dem bisherigen Stand der Technik bekannten Zitrussaftschläuchen nur unter Verwendung sehr großer Mengen möglich, Lebensmittel zu aromatisieren. Hinzu kommt die Problematik, dass im Rahmen einer Konservierung der Zitrussaftschläuche üblicherweise weitere hohe Aromaverluste und/oder Aromaveränderungen auftreten. Beispielsweise sind so sterilisierte Segmente von Mandarin-Orangen in Dosen wenig aromatisch und die einzelnen Saftschläuche sind von weicher Konsistenz. Lediglich das Gefrieren der Saftschläuche hat sich als aromaschonend und texturschonend herausgestellt, wobei das Gefrieren schockartig bei sehr tiefen Temperaturen von weniger als -73 °C erfolgt, bevorzugt bei Temperaturen von ca. -200°C. Zur Durchführung dieses Schockgefrierens werden kryogene Gase wie Stickstoff benötigt, die eine Reihe weiterer Probleme verursachen. Die Herstellung der kryogenen Gase ist energieaufwändig und deren Handhabung sowie Lagerung erfordern die Einhaltung von speziellen Sicherheitsmaßnahmen. Schließlich können die kaltverflüssigten Gase meist nicht zurückgewonnen werden, sodass insgesamt betrachtet deren Verwendung teuer ist. Andererseits schädigt das Gefrieren bei relativ moderaten Temperaturen oberhalb von - 73°C die Zitrussaftschläuche so stark, dass nach dem Auftauen der enthaltene Saft austritt. Infolge der geringen Gefriergeschwindigkeit bilden sich große Eiskristalle, die eine mechanische Zerstörung der Zitrussaftzellen bewirken. Das Ziel der Herstellung intakter, vereinzelter Zitrussaftschläuche wird damit verfehlt.

Es war die Aufgabe der vorliegenden Erfindung, Mischungen umfassend oder bestehend aus intakten, vereinzelten Zitrussaftschläuchen anzugeben, die im Vergleich mit natürlichen Zitrussaftschläuchen einen erhöhten Aromagehalt besitzen. Ferner sollten die anzugebenden Mischungen intakte, vereinzelte Zitrussaftschläuche umfassen oder aus diesen bestehen, wobei die Zitrussaftschläuche vorzugsweise eine hohe Gefrierstabilität und Auftaustabilität besitzen. Hieraus resultiert dann eine insgesamt erhöhte Lagerstabilität.

Des Weiteren sollten mit der vorliegenden Erfindung Verfahren zur Herstellung der anzugebenden Mischung bereitgestellt werden, d.h. also insbesondere Verfahren, mit denen der Aromagehalt intakter, vereinzelter Zitrussaftschläuche erhöht wird.

Weitere Aufgabenstellungen, die der vorliegenden Erfindung zugrunde liegen, ergeben sich aus den nachfolgenden Ausführungen und den beigefügten Patentansprüchen.

Der Aspekt der Aufgabenstellung, welcher die anzugebenden Mischungen betrifft, wird erfindungsgemäß gelöst durch eine Mischung umfassend oder bestehend aus intakten, vereinzelten Zitrussaftschläuchen mit Aromazusatz, wobei diese Zitrussaftschläuche bezogen auf ihr Gesamtgewicht
- einen Aromagehalt von 50 ppm (0,005 Gew.-%) oder mehr
besitzen.

Sofern die erfindungsgemäße Mischung aus den besagten intakten, vereinzelten Zitrussaftschläuchen mit Aromazusatz besteht, handelt es sich um eine Ansammlung solcher Zitrussaftschläuche.

Bevorzugt sind erfindungsgemäße Mischungen umfassend oder bestehend aus intakten, vereinzelten Zitrussaftschläuchen mit Aromazusatz, wobei diese Zitrussaftschläuche bezogen auf ihr Gesamtgewicht sogar
- einen Aromagehalt von 500 ppm (0,05 Gew.-%) oder mehr, vorzugsweise 1000 ppm (0,1 Gew.-%) oder mehr
besitzen.

Vorzugsweise beträgt der Anteil des Aromazusatzes an dem Aroma-Gesamtgewicht der besagten Zitrussaftschläuche 50 Gew.-% oder mehr. Bestimmt man somit das Gesamtgewicht der in den erfindungsgemäßen Zitrussaftschläuchen enthaltenen Aromen, so beträgt der Anteil der natürlicherweise in den Zitrussaftschläuchen vorliegenden Aromen vorzugsweise 50 Gew.-% oder weniger.

Dementsprechend betrifft ein weiterer Aspekt der vorliegenden Erfindung erfindungsgemäße Mischungen, wobei der Anteil des Aromazusatzes an dem Aroma-Gesamtgewicht der besagten Zitrussaftschläuche 50 Gew.-% oder mehr beträgt.

Aufgrund des Aromazusatzes, d.h. aufgrund des erhöhten Aromagehaltes der erfindungsgemäß eingesetzten Zitrussaftschläuche eignen sich die erfindungsgemäßen Mischungen besonders gut zur Aromatisierung von Zubereitungen, wie z.B. Lebensmitteln oder anderen dem Genuss oder der Ernährung dienen Zubereitungen.

Überraschenderweise sind die in den erfindungsgemäßen Mischungen vorhandenen Zitrussaftschläuche mit Aromazusatz besonders gut konservierbar. Besonders erfolgreich lassen sich die intakten, vereinzelten Zitrussaftschläuche mit Aromazusatz durch Gefrieren konservieren, und in eigenen Untersuchungen hat sich gezeigt, dass erfindungsgemäße Mischungen eine überraschend hohe Gefrier- und Auftaustabilität besitzen, so dass sie insbesondere im gefrorenen Zustand besonders lagerstabil sind. Besonders bevorzugt ist es daher, wenn in einer erfindungsgemäßen Mischung die darin enthaltenen Zitrussaftschläuche mit Aromazusatz gefroren sind.

Ein erfindungsgemäßes Verfahren zur Herstellung einer erfindungsgemäßen Mischung umfasst die folgenden Schritte:
a) Bereitstellen intakter, vereinzelter Zitrussaftschläuche, und
b) Kontaktieren der Zitrussaftschläuche mit einer oder mehreren flüssigen Aromazubereitungen, so dass der Aromagehalt der Zitrussaftschläuche erhöht wird.
Vorzugsweise umfasst ein erfindungsgemäßes Verfahren den folgenden weiteren Schritt:
c) Gefrieren der gemäß Schritt b) erhaltenen Zitrussaftschläuche mit Aromazusatz, in An- oder Abwesenheit des oder der flüssigen Aromazubereitungen.

Mischungen umfassend gefrorene intakte, vereinzelte Zitrussaftschläuche mit Aromazusatz werden vorzugsweise erhalten, indem die entsprechenden Zitrussaftschläuche (üblicherweise in Schritt c) eines erfindungsgemäßen Verfahrens) bei einer Temperatur im Bereich zwischen ihrer Gefriertemperatur und einer Temperatur oberhalb von -73 °C, vorzugsweise bei einer Temperatur im Bereich von -15 bis -40 °C, gefroren werden.

Dementsprechend wird gemäß einem weiteren Aspekt der vorliegenden Erfindung ein wie oben definiertes Verfahren angegeben, weiter dadurch gekennzeichnet, dass das Gefrieren der Zitrussaftschläuche in Schritt c) bei einer Temperatur im Bereich zwischen ihrer Gefriertemperatur und einer Temperatur oberhalb von -73 °C, vorzugsweise bei einer Temperatur im Bereich von -15 bis -40 °C, erfolgt.

Für die Konservierung erfindungsgemäßer Mischungen (insbesondere solcher Mischungen, die aus erfindungsgemäß einzusetzenden Zitrussaftschläuchen bestehen) sind somit Gefriertemperaturen geeignet, welche höher sind als die bislang üblichen Temperaturen (vgl. die oben bereits gewürdigten Dokumente US 5,246,993 und GB 978418). Eine entsprechende Ausgestaltung des erfindungsgemäßen Verfahrens ist also besonders wirtschaftlich und umweltfreundlich und führt dennoch zu intakten, vereinzelten, lagerstabilen und einen hohen Gehalt an Aromen besitzenden Zitrussaftschläuchen.

Die intakten, vereinzelten Zitrussaftschläuche mit Aromazusatz, welche im Rahmen der vorliegenden Erfindung eingesetzt bzw. hergestellt werden, haben üblicherweise
- einen Trockensubstanzgehalt von 3 - 30 Gew.-%, sowie
- einen Wassergehalt von 69,995 - 96,995 Gew.-%.

Unter dem Begriff "Zitrussaftschläuche" werden im Rahmen des vorliegenden Textes Saft enthaltende Schläuche (auch Zellen, Säcke, Vesikel; engl.: sacks, cells, vesicel) verstanden, wie sie in der Natur in Zitrusfrüchten vorkommen. Der Begriff "Zitrussaftschläuche mit Aromazusatz" bezeichnet entsprechende Saftschläuche, deren Aromagehalt durch ein entsprechendes Behandlungsverfahren erhöht ist. Zitrussaftschläuche (im unbehandelten Zustand) stellen Endokarpemergenzen dar, die sich aus dem Endokarp in Form saftgefüllter kleiner Säckchen nach Innen in die einzelnen Fruchtsegmente der Zitrusfrucht stülpen und diese ausfüllen. Der Saft im Inneren eines Zitrussaftschlauches ist dabei von einer Epidermis umhüllt. Zitrussaftschäuche sind meist schlauch- bis keulenförmig, sind mit dem Auge gut zu erkennen und füllen in der Regel den überwiegenden Raum der Zitrusfrucht aus. Eine Vielzahl von Saftschläuchen ist zu so genannten Segmenten (auch Cluster, Fruchtfächer) zusammengelagert, wobei jedes Segment von einer Membran (Haut) umhüllt ist. In jeder Zitrusfrucht sind etwa 5 bis 15 Segmente radial angeordnet. Die Segmente werden vom weißlichen Mesokarp (Albedo) umhüllt und die gesamte Anordnung wird schließlich nach außen durch das Exocarp (Flavedo) geschützt. Aus Zitrussaftschläuchen können die darin enthaltenen Zitrussäfte, z.B. Orangensaft, gewonnen werden.

Der Begriff "Zitrusfrüchte" bezeichnet die Früchte von Pflanzen der Gattung Citrus L. aus der Familie der Rutaceae. Des weiteren werden auch Früchte von Pflanzen der Gattung Fortunella, Poncirus, Microcitrus, Eremocitrus sowie Kreuzungen (Hybriden) aus Pflanzen der genannten Gattungen unter dem Begriff Zitrusfrüchte verstanden. Wichtige Arten der beschriebenen Gattungen sowie Kreuzungen sind beispielsweise: Citrus sinensis, Citrus reticulata, Citrus limon, Citrus grandis, Citrus medica, Citrus aurantifolia, Citrus aurantium, Citrus mitis, Citrus maxima, Citrus medica, Citrus glauca (auch Eremocitrus glauca), Citrus australasica (auch Microcitrus australasica), Citrus sphaerocarpa, Citrus x paradisi, Citrus x aurantium, Citrus x limonia, Citrus x latifolia, Poncirus trifoliata, Citrus x macrophylla, Citrus x bergamia, Citrus x amblycarpa, Citrus x pennivesiculata, Citrus x ichangensis, Citrus limon x, Citrus paradisi, Citrus x hystrix, Citrus x latipes, Citrus x limon, Citrus x limetta, Citrus x Fortunella Hybrids, Citrus x limonia, Citrus x natsudaidai, Citrus x jambhiri, Citrus x depressa, Citrus x sunki, Citrus x limettioides, Citrus x nobilis sowie Citrus x junos.

Zitrusfrüchte, die zur Verwendung im Rahmen der vorliegenden Erfindung besonders geeignet sind, sind z.B. Orange, Apfelsine, Mandarine, Tangerine, Zitrone, Grapefruit, Pampelmuse, Zedratzitrone, Limette, Pomeranze, Bitterorange, Calamondine, Kumquat, Bergamotte, Tangelo. Weitere geeignete Zitrusfrüchte sind beispielsweise: Alemow, Amanatsu, Blutorange, Bergamottorange, Calamondin, Clementine, Fingerlimette, Gajanimma, Carabao Limette, Ichanzitrone, Imperialzitrone, lyokan, Kabosu, Kaffirlimette, Schlüssellimette, Kinnow, Khasi pepeda, Limone, Limequat, Mandarinorange, Mandarinlimette, Meyerzitrone, Mikan, Natsumikan, Orangelo, Orangequat, Oroblanco, persische Limette, Pomelo, Ponderosazitrone, Ponkan, Rangpur, Lemanderin, Rough Lemon, Satsuma, Shekwasha, Sudachi, Sunkie, Sweetie, süße Limette, Tachibana Orange, Tangor, Ugli fruit sowie Yuzu.

Spezielle Orangensorten, die zur Verwendung im Rahmen der vorliegenden Erfindung besonders geeignet sind, sind z.B.: Blondorangen (z.B. Baladi, Shamout, Jaffaorange, Hamlin, Hart's Tadiff Valencia, Valencia Late), Navelorangen (auch: Bahia-Orangen) (z.B. Cara Cara, Navelate, Navelina, Washington Navel), Blutorangen (z.B. Double fine, Manica, Moro, Sanguine, Sanguinello, Tarocco) und säurefreie Orangen (z.B. Mosambi).

Für die Zwecke der vorliegenden Erfindung bevorzugte geeignete Zitrusfrüchte sind: Orangen, Blutorangen, Zitronen, Pampelmusen, Mandarinen, Grapefruits, Pomelos, Mandarinorangen, Clementinen, Satsumas und Tangerinen.

Der Begriff "Aroma" bezeichnet im vorliegenden Text Einzelstoffe (Aromastoffe) oder eine Mischung von Einzelstoffen (Aromastoffen) und ggf. Aromalösungsmitteln. Der Aromagehalt der erfindungsgemäß zu verwendenden intakten, vereinzelten Zitrussaftschläuche mit Aromazusatz setzt sich zusammen aus einem Anteil an natürlich vorhandenem Aroma und einem Anteil an zugesetztem Aroma (in dem Aromazusatz).

Weiter oben wurden bereits Angaben zu bevorzugten Aromagehalten und dem bevorzugten Anteil des Aromazusatzes an dem Aroma-Gesamtgewicht der erfindungsgemäß einzusetzenden Zitrussaftschläuche gemacht. Aus diesen Ausführungen wird bereits klar, dass erfindungsgemäße Mischungen sich durch ihren besonders hohen Aromagehalt von den bislang bekannten Mischungen umfassend oder bestehend aus intakten, vereinzelten Zitrussaftschläuchen deutlich unterscheiden. Eine erfindungsgemäße Mischung kann neben den erfindungsgemäß einzusetzenden intakten, vereinzelten Zitrussaftschläuchen mit Aromazusatz auch eine Anzahl von nicht-intakten und/oder nicht-vereinzelten Zitrussaftschläuchen umfassen. Der zahlenmäßige Anteil der vereinzelten, intakten oder nicht intakten Zitrussaftschläuche, d.h. der Anteil an vereinzelten Zitrussaftschläuchen (unabhängig davon ob sie intakt sind oder nicht) beträgt vorzugsweise 50% oder mehr, bezogen auf die Gesamtmenge der Zitrussaftschläuche, vorzugsweise jedoch 90% oder mehr, bevorzugt 95% oder mehr und ganz besonders bevorzugt 99% oder mehr. Der zahlenmäßige Anteil der intakten, vereinzelten oder nicht vereinzelten Zitrussaftschläuche, d.h. der Anteil der intakten Zitrussaftschläuche (unabhängig davon ob sie vereinzelt sind oder nicht) beträgt vorzugsweise 50%, bezogen auf die Gesamtmenge der Zitrussaftschläuche, besonders bevorzugt jedoch 65% oder mehr und ganz besonders bevorzugt 85% oder mehr. Vorzugsweise treffen beide Aussagen zu den zahlenmäßigen Anteilen der vereinzelten bzw. der intakten Zitrussaftschläuche für eine erfindungsgemäße Mischung gleichzeitig zu, dies muss jedoch nicht der Fall sein.

Vorzugsweise handelt es sich bei einer erfindungsgemäßen Mischung um eine (a) der Ernährung oder (b) dem Genuss dienende Zubereitung oder (c) eine entsprechende Halbfertigware. Ganz besonders bevorzugt sind erfindungsgemäße Mischungen Lebensmittelzubereitungen im gefrorenen Zustand oder entsprechende Halbfertigwaren. Ebenfalls bevorzugt sind erfindungsgemäße Mischungen, bei denen es sich um eine Zubereitung handelt, die neben gefrorenen Bestandteilen, insbesondere gefrorenen Lebensmittel-Komponenten, die erfindungsgemäß einzusetzenden intakten, vereinzelten Zitrussaftschläuche mit Aromazusatz umfassen.

Die vorliegende Erfindung betrifft auch eine entsprechende Verwendung einer erfindungsgemäßen Mischung als (a) Mittel zur Aromatisierung von der Ernährung oder dem Genuss dienenden Zubereitungen oder Halbfertigwaren oder (b) eine entsprechende Halbfertigware oder (c) der Ernährung oder dem Genuss dienende Zubereitung.

Die Erfindung betrifft insbesondere Mischungen umfassend intakte, vereinzelte Zitrussaftschläuche mit Aromazusatz (wie oben weiter beschrieben, insbesondere in einer der als bevorzugt angegebenen Ausgestaltungen) wobei die erfindungsgemäße Mischung neben den besagten Zitrussaftschläuchen noch einen oder mehrere Bestandteile umfasst aus der Gruppe bestehend aus: Milch, Milchprodukt (z.B. Joghurt, Joghurtdrinks, Frischkäsezubereitungen, Quark, probiotischer Joghurt, probiotischer Joghurtdrink, Dickmilch, Kefir, Milcheis, Buttermilch), Fruchzubereitung (z.B. Fruchtgelee, Marmelade, Konfitüre, Fruchtfüllungen, Fruchteis, Sorbet), Dessertzubereitung (z.B. Pudding, Götterspeise), Fettmasse (z.B. Backwarenfüllung für z.B. Keksfüllung, Schokoladenfettfüllung, Riegelfettfüllung), alkoholisches oder nicht-alkoholisches Getränk (z.B. Kaffee, Tee, Wein, weinhaltiges Getränk, Bier, bierhaltiges Getränk, Likör, Schnaps, Weinbrand, fruchthaltige Limonade, isotonisches Getränk, Erfrischungsgetränk, Nektar, Obst- und Gemüsesaft, Frucht- oder Gemüsesaftzubereitung), Fleischprodukt (z.B. gewürztes oder mariniertes Frisch- oder Pökelfleischprodukt), Produkt aus Sojaprotein oder anderen Sojabohnenfraktionen (z.B. Sojamilch oder daraus gefertigtes Produkt), Gemüsezubereitung (z.B. Ketchup, Soße, Tiefkühlgemüse, vorgegartes Gemüse, in Essig eingelegtes Gemüse, eingekochtes Gemüse), Produkt auf Fett- und Ölbasis oder entsprechende Emulsion (z.B. Mayonnaise, Remoulade, Dressing, Würzzubereitung).

Die erfindungsgemäß einzusetzenden intakten, vereinzelten Zitrussaftschläuche mit Aromazusatz können Bestandteil sein von: Fertiggerichten und Suppen (z.B. vorgegarten Suppen), Tiefkühlkost (tiefgekühlte Fertiggerichte wie Reis-, Nudel-, Fleisch-, Fisch-, Geflügel- und Kartoffelgerichte, tiefgefühlte Torten und Kuchen) sowie Backwaren (z.B. Kuchen, Torten). Jede der genannten Speisen stellt (aufgrund der Anwesenheit der erfindungsgemäß einzusetzenden intakten, vereinzelten Zitrussaftschläuche mit Aromazusatz) eine erfindungsgemäße Mischung dar.

Es versteht sich, dass die erfindungsgemäß einzusetzenden intakten, vereinzelten Zitrussaftschläuche mit Aromazusatz in das entsprechende Lebensmittel eingearbeitet oder auf dessen Oberfläche (z.B. auf der Oberseite, Unterseite oder Seitenfläche) appliziert sein können.

Es wurde bereits erwähnt, dass in einem erfindungsgemäßen Herstellverfahren das Gefrieren der Zitrussaftschläuche in Schritt c) vorzugsweise bei einer Temperatur im Bereich zwischen ihrer Gefriertemperatur und einer Temperatur oberhalb von -73° C erfolgt. Bevorzugt ist hierbei eine Temperatur im Bereich von -15 bis -40° C. Unter der Gefriertemperatur der Zitrussaftschläuche ist hierbei die Temperatur zu verstehen, bei der der in den Zitrussaftschläuchen enthaltene Saft gefriert. Dies ist regelmäßig bei Temperaturen von knapp unter 0° C der Fall.

In einem erfindungsgemäßen Herstellverfahren wird Schritt b) vorzugsweise so durchgeführt, dass einer, mehrere oder sämtliche Aromastoffe aus der oder den flüssigen Aromazubereitungen in die Zitrussaftschläuche aufgenommen werden, vorzugsweise in den umhüllten Saft der Zitrussaftschläuche. Dies bedeutet in der Praxis, dass die intakten, vereinzelten Zitrussaftschläuche, deren Aromagehalt erhöht werden soll, so lange unter einer solchen Temperatur mit der oder den flüssigen Aromazubereitungen kontaktiert werden, bis sich der Aromagehalt der Zitrussaftschläuche (vorzugsweise der Aromagehalt des umhüllten Saftes der Zitrussaftschläuche) signifikant erhöht hat. Der Fachmann kann anhand einfacher Vorversuche ermitteln, welche Behandlungszeiten und welche Behandlungstemperaturen für eine gegebene Aromatisierungsaufgabe geeignet sind. Ebenfalls kann er anhand einfacher Vorversuche ermitteln, wie eine flüssige Aromazubereitung zusammengesetzt sein sollte, um ein möglichst zügiges Eindringen von Aroma in die betreffenden Zitrussaftschläuche zu erreichen. Wie bereits erwähnt liegen im erfindungsgemäßen Herstellverfahren die Aromazubereitungen in flüssiger Form vor. Eingesetzt werden können somit Aromastoffe, die per se flüssig sind, ebenso wie Aromastoffe, die aufgrund der Anwesenheit eines Lösungsmittels in gelöster Form vorliegen. Vorzugsweise liegt der Gefrierpunkt einer flüssigen Aromazubereitung zur Verwendung in einem erfindungsgemäßen Herstellverfahren unterhalb von 0° C, bevorzugt unterhalb von -18° C, besonders bevorzugt unterhalb von -30° C. Während in einem erfindungsgemäßen Herstellverfahren in einem Schritt c) die in Schritt b) erhaltenen Zitrussaftschläuche mit Aromazusatz gefroren werden sollen, wobei die flüssigen Aromazubereitungen während des Gefrierprozesses anwesend sein sollen, besitzt die eingesetzte flüssige Aromazubereitung vorzugsweise einen Gefrierpunkt, der unterhalb der in Schritt c) des entsprechenden Verfahrens zum Gefrieren gewählten Temperatur liegt. Der Fachmann wird den Gefrierpunkt der einzusetzenden flüssigen Aromazubereitung seinen Wünschen entsprechend durch gezielten Einsatz von Additiven und durch eine gezielte Auswahl von Lösungsmitteln und dergleichen einstellen.

Zur Erhöhung des Aromagehaltes von intakten, vereinzelten Zitrussaftschläuchen sind eine Vielzahl von Aromazubereitungen und Aromen (Aromastoffe und deren Mischungen) geeignet. Insbesondere geeignet sind:

Extrakte aus natürlichen Rohstoffen wie Etherische Öle, Concretes, Absolues, Resine, Resinoide, Balsame, Tinkturen; Amyrisöl; Angelicasamenöl; Angelicawurzelöl; Anisöl; Baldrianöl; Basilikumöl; Baummoos -Absolue; Bayöl; Beifußöl; Benzoeresin; Bergamotteöl; Bienenwachs-Absolue; Birkenteeröl; Bittermandelöl; Bohnenkrautöl; Buccoblätteröl; Cabreuvaöl; Cadeöl; Calmusöl; Campheröl; Canangaöl; Cardamomenöl; Cascarillaöl; Cassiaöl; Cassie-Absolue; Castoreum-Absolue; Cedernblätteröl; Cedernholzöl; Cistusöl; Citronellöl; Citronenöl; Copaivabalsam; Copaivabalsamöl; Corianderöl; Costuswurzelöl; Cuminöl; Cypressenöl; Davanaöl; Dillkrautöl; Dillsamenöl; Eichenmoos-Absolue; Elemiöl; Estragonöl; Eucalyptus-citriodora-Öl; Eucalyptusöl; Fenchelöl; Fichtennadelöl; Galbanumöl; Galbanumresin; Geraniumöl; Grapefruitöl; Guajakholzöl; Gurjunbalsam; Gurjunbalsamöl; Helichrysum-Absolue; Helichrysumöl; Ingweröl; Iriswurzel-Absolue; Iriswurzelöl; Jasmin-Absolue; Kalmusöl; Kamillenöl blau; Kamillenöl römisch; Karottensamenöl; Kaskarillaöl; Kiefernadelöl; Krauseminzöl; Kümmelöl; Labdanumöl; Labdanum-Absolue; Labdanumresin; Lavandin-Absolue; Lavandinöl ; Lavendel-Absolue; Lavendelöl; Lemongrasöl; Liebstocköl; Limettenöl destilliert; Limettenöl gepresst; Linaloeöl; Litsea-cubeba-Öl; Lorbeerblätteröl; Macisöl; Majoranöl; Mandarinenöl; Massoirindenöl; Mimosa-Absolue; Moschuskörneröl; Moschustinktur; Muskateller-Salbei-Öl; Muskatnußöl; Myrrhen-Absolue; Myrrhenöl; Myrtenöl; Nelkenblätteröl; Nelkenblütenöl; Neroliöl; Olibanum-Absolue; Olibanumöl; Opopanaxöl; Orangenblüten-Absolue; Orangenöl; Origanumöl; Palmarosaöl; Patchouliöl; Perillaöl; Perubalsamöl; Petersilienblätteröl; Petersiliensamenöl; Petitgrainöl; Pfefferminzöl; Pfefferöl; Pimentöl; Pineöl; Poleyöl; Rosen-Absolue; Rosenholzöl; Rosenöl; Rosmarinöl; Salbeiöl dalmatinisch; Salbeiöl spanisch; Selleriesamenöl; Spiklavendelöl; Sternanisöl; Styraxöl; Tagetesöl; Tannennadelöl; Teebaumöl; Terpentinöl; Thymianöl; Tolubalsam; Tonka-Absolue; Tuberosen-Absolue; Vanilleextrakt; Veilchenblätter-Absolue; Verbenaöl; Vetiveröl; Wacholderbeeröl; Weinhefenöl; Wermutöl; Wintergrünöl; Ylangöl; Ysopöl; Zibet-Absolue; Zimtblätteröl; Zimtrindenöl; sowie Fraktionen davon, bzw. daraus isolierten Inhaltsstoffen.

Zur Erhöhung des Aromagehaltes besonders geeignete Einzelstoffe (Aromastoffe) sind Verbindungen aus der Gruppe der Kohlenwasserstoffe, wie z.B. 3-Caren; α-Pinen; β-Pinen; α-Terpinen; γ-Terpinen; p-Cymol; Bisabolen; Camphen; Caryophyllen; Cedren; Farnesen; Limonen; Longifolen; Myrcen; Ocimen; Valencen; (E,Z)-1,3,5-Undecatrien;
der aliphatischen Alkohole wie z.B. Hexanol; Octanol; 3-Octanol; 2,6-Dimethylheptanol; 2-Methylheptanol, 2-Methyloctanol; (E)-2-Hexenol; (E)- und (Z)-3-Hexenol; 1-Octen-3-ol; Gemisch von 3,4,5,6,6-Pentamethyl-3/4-hepten-2-ol und 3,5,6,6-Tetramethyl-4-methyleneheptan-2-ol; (E,Z)-2,6-Nonadienol; 3,7-Dimethyl-7-methoxyoctan-2-ol; 9-Decenol; 10-Undecenol; 4-Methyl-3-decen-5-ol; der aliphatischen Aldehyde und deren 1,4-Dioxacycloalken-2-one wie z. B. Hexanal; Heptanal; Octanal; Nonanal; Decanal; Undecanal; Dodecanal; Tridecanal; 2-Methyloctanal; 2-Methylnonanal; (E)-2-Hexenal; (Z)-4-Heptenal; 2,6-Dimethyl-5-heptenal; 10-Undecenal; (E)-4-Decenal; 2-Dodecenal; 2,6,10-Trimethyl-5,9-undecadienal; Heptanaldiethylacetal; 1,1-Dimethoxy-2,2,5-trimethyl-4-hexen;
der aliphatischen Ketone und deren Oxime wie z.B. 2-Heptanon; 2-Octanon; 3-Octanon; 2-Nonanon; 5-Methyl-3-heptanon ; 5-Methyl-3-heptanonoxim; 2,4,4,7-Tetramethyl-6-octen-3-on; der aliphatischen schwefelhaltigen Verbindungen wie z.B. 3-Methylthiohexanol; 3-Methylthiohexylacetat; 3-Mercaptohexanol; 3-Mercaptohexylacetat; 3-Mercaptohexylbutyrat; 3-Acetylthiohexylacetat; 1-Menthen-8-thiol;
der aliphatischen Nitrile wie z.B. 2-Nonensäurenitril; 2-Tridecensäurenitril; 2,12-Tridecadiensäurenitril; 3,7-Dimethyl-2,6-octadiensäurenitril; 3,7-Dimethyl-6-octensäurenitril;
der aliphatischen Carbonsäuren und deren Ester wie z.B. (E)- und (Z)-3-Hexenylformiat; Ethylacetoacetat; Isoamylacetat; Hexylacetat; 3,5,5-Trimethylhexylacetat; 3-Methyl-2-butenylacetat; (E)-2-Hexenylacetat; (E)- und (Z)-3-Hexenylacetat; Octylacetat; 3-Octylacetat; 1-Octen-3-ylacetat; Ethylbutyrat; Butylbutyrat; Isoamylbutyrat; Hexylbutyrat; (E)- und (Z)-3-Hexenylisobutyrat; Hexylcrotonat; Ethylisovalerianat; Ethyl-2-methyl-pentanoat; Ethylhexanoat; Allylhexanoat; Ethylheptanoat; Allylheptanoat; Ethyloctanoat; Ethyl-(E,Z)-2,4-decadienoat; Methyl-2-octinat; Methyl-2-noninat; Allyl-2-isoamyloxyacetat; Methyl-3,7-dimethyl-2,6-octadienoat;
der acyclischen Terpenalkohole wie z.B. Citronellol; Geraniol; Nerol; Linalool; Lavadulol; Nerolidol; Farnesol; Tetrahydrolinalool; Tetrahydrogeraniol; 2,6-Dimethyl-7-octen-2-ol; 2,6-Dimethyloctan-2-ol; 2-Methyl-6-methylen-7-octen-2-ol; 2,6-Dimethyl-5,7-octadien-2-ol; 2,6-Dimethyl-3,5-octadien-2-ol; 3,7-Dimethyl-4,6-octadien-3-ol; 3,7-Dimethyl-1,5,7-octatrien-3-ol 2,6-Dimethyl-2,5,7-octatrien-l-ol; sowie deren Formiate, Acetate, Propionate, Isobutyrate, Butyrate, Isovalerianate, Pentanoate, Hexanoate, Crotonate, Tiglinate, 3-Methyl-2-butenoate;
der acyclischen Terpenaldehyde und -ketone wie z.B. Geranial; Neral; Citronellal; 7-Hydroxy-3,7-dimethyloctanal; 7-Methoxy-3,7-dimethyloctanal; 2,6,10-Trimethyl-9-undecenal; Geranylaceton; sowie die Dimethyl- und Diethylacetale von Geranial, Neral, 7-Hydroxy-3,7-dimethyloctanal;
der cyclischen Terpenalkohole wie z.B. Menthol; Isopulegol; alpha-Terpineol; Terpinenol-4; Menthan-8-ol; Menthan-1-ol; Menthan-7-ol; Borneol; Isoborneol; Linalooloxid; Nopol; Cedrol; Ambrinol; Vetiverol; Guajol; sowie deren Formiate, Acetate, Propionate, Isobutyrate, Butyrate, Isovalerianate, Pentanoate, Hexanoate, Crotonate, Tiglinate, 3-Methyl-2-butenoate;
der cyclischen Terpenaldehyde und -ketone wie z.B. Menthon; Isomenthon; 8-Mercaptomenthan-3-on; Carvon; Campher; Fenchon; alpha-Ionon; beta-Ionon; alpha-n-Methylionon; beta-n-Methylionon; alpha-Isomethylionon; beta-Isomethylionon; alpha-Iron; alpha-Damascon; beta-Damascon; beta-Damascenon; delta-Damascon; gamma-Damascon; 1-(2,4,4-Trimethyl-2-cyclohexen-1-yl)-2-buten-1-on; 1,3,4,6,7,8a-Hexahydro-1,1,5,5-tetramethyl-2H-2,4a-methanonaphthalen-8(5H)-on; Nootkaton; Dihydronootkaton; alpha-Sinensal; beta-Sinensal;
der cyclischen Alkohole wie z.B. 4-tert.-Butylcyclohexanol; 3,3,5-Trimethylcyclohexanol; 3-Isocamphylcyclohexanol; 2,6,9-Trimethyl-Z2,Z5,E9-cyclododecatrien-1-ol; 2-Isobutyl-4-methyltetrahydro-2H-pyran-4-ol;
der cycloaliphatischen Alkohole wie z.B. alpha,3,3-Trimethylcyclohexylmethanol; 2-Methyl-4-(2,2,3-trimethyl-3-cyclopent-1-yl)butanol; 2-Methyl-4-(2,2,3-trimethyl-3-cyclopent-1-yl)-2-buten-l-ol; 2-Ethyl-4-(2,2,3-trimethyl-3-cyclopent-1-yl)-2-buten-1-ol; 3-Methyl-5-(2,2,3-trimethyl-3-cyclopent-1-yl)-pentan-2-ol; 3-Methyl-5-(2,2,3-trimethyl-3-cyclopent-1-yl)-4-penten-2-ol; 3,3-Dimethyl-5-(2,2,3-trimethyl-3-cyclopent-1-yl)-4-penten-2-ol; 1-(2,2,6-Trimethylcyclohexyl)pentan-3-ol; 1-(2,2,6-Trimethylcyclohexyl)hexan-3-ol;
der Ester cycloaliphatischer Carbonsäuren wie z.B. Allyl-3-cyclohexylpropionat; Allylcyclohexyloxyacetat; Methyldihydrojasmonat; Methyljasmonat; Methyl-2-hexyl-3-oxocyclopentancarboxylat; Ethyl-2-ethyl-6,6-dimethyl-2-cyclohexencarboxylat; Ethyl-2,3,6,6-tetramethyl-2-cyclohexencarboxylat; Ethyl-2-methyl-1,3-dioxolan-2-acetat;
der aromatischen Kohlenwasserstoffe wie z.B. Styrol und Diphenylmethan;
der araliphatischen Alkohole wie z.B. Benzylalkohol; 1-Phenylethylalkohol; 2-Phenylethylalkohol; 3-Phenylpropanol; 2-Phenylpropanol; 2-Phenoxyethanol; 2,2-Dimethyl-3-phenylpropanol; 2,2-Dimethyl-3-(3-methylphenyl)propanol; 1,1-Dimethyl-2-phenylethylalkohol; 1,1-Dimethyl-3-phenylpropanol; 1-Ethyl-1-methyl-3-phenylpropanol; 2-Methyl-5-phenylpentanol; 3-Methyl-5-phenylpentanol; 3-Phenyl-2-propen-1-ol; 4-Methoxybenzylalkohol; 1-(4-Isopropylphenyl)ethanol;
der Ester von araliphatischen Alkoholen und aliphatischen Carbonsäuren wie z.B. Benzylacetat; Benzylpropionat; Benzylisobutyrat; Benzylisovalerianat; 2-Phenylethylacetat; 2-Phenylethylpropionat; 2-Phenylethylisobutyrat; 2-Phenylethylisovalerianat; 1-Phenylethylacetat; alpha-Trichlormethylbenzylacetat; alpha,alpha-Dimethylphenylethylacetat; alpha,alpha-Dimethylphenylethylbutyrat; Cinnamylacetat; 2-Phenoxyethylisobutyrat; 4-Methoxybenzylacetat; der araliphatischen Ether wie z.B. 2-Phenylethylmethylether; 2-Phenylethylisoamylether; 2-Phenylethyl-1-ethoxyethylether; Phenylacetaldehyddimethylacetal; Phenylacetaldehyddiethylacetal; Hydratropaaldehyddimethylacetal; Phenylacetaldehydglycerinacetal;
der aromatischen und araliphatischen Aldehyde wie z.B. Benzaldehyd; Phenylacetaldehyd; 3-Phenylpropanal; Hydratropaaldehyd; 4-Methylbenzaldehyd; 4-Methylphenylacetaldehyd; 3-(4-Ethylphenyl)-2,2-dimethylpropanal; 2-Methyl-3-(4-isopropylphenyl)propanal; 2-Methyl-3-(4-tert.-butylphenyl)propanal; 3-(4-tert.-Butylphenyl)propanal; Zimtaldehyd; alpha-Butylzimtaldehyd; alpha-Amylzimtaldehyd; alpha-Hexylzimtaldehyd; 3-Methyl-5-phenylpentanal; 4-Methoxybenzaldehyd; 4-Hydroxy-3-methoxybenzaldehyd; 4-Hydroxy-3-ethoxybenzaldehyd; 3,4-Methylendioxybenzaldehyd; 3,4-Dimethoxybenzaldehyd; 2-Methyl-3-(4-methoxyphenyl)propanal; 2-Methyl-3-(4-methylendioxyphenyl)propanal;
der aromatischen und araliphatischen Ketone wie z.B. Acetophenon; 4-Methylacetophenon; 4-Methoxyacetophenon; 4-tert.-Butyl-2,6-dimethylacetophenon; 4-Phenyl-2-butanon; 4-(4-Hydroxyphenyl)-2-butanon; 1-(2-Naphthalenyl)ethanon; Benzophenon;
der aromatischen und araliphatischen Carbonsäuren und deren Ester wie z.B. Benzoesäure; Phenylessigsäure; Methylbenzoat; Ethylbenzoat; Hexylbenzoat; Benzylbenzoat; Methylphenylacetat; Ethylphenylacetat; Geranylphenylacetat; Phenylethylphenylacetat; Methylcinnmat; Ethylcinnamat; Benzylcinnamat; Phenylethylcinnamat; Cinnamylcinnamat; Allylphenoxyacetat; Methylsalicylat; Isoamylsalicylat; Hexylsalicylat; Cyclohexylsalicylat; Cis-3-Hexenylsalicylat; Benzylsalicylat; Phenylethylsalicylat; Methyl-2,4-dihydroxy-3,6-dimethylbenzoat; Ethyl-3-phenylglycidat; Ethyl-3-methyl-3-phenylglycidat;
der stickstoffhaltigen aromatischen Verbindungen wie z.B. 2,4,6-Trinitro-1,3-dimethyl-5-tert.-butylbenzol; 3,5-Dinitro-2,6-dimethyl-4-tert.-butylacetophenon; Zimtsäurenitril; 5-Phenyl-3-methyl-2-pentensäurenitril; 5-Phenyl-3-methylpentansäurenitril; Methylanthranilat; Methy-N-methylanthranilat; Schiff'sche Basen von Methylanthranilat mit 7-Hydroxy-3,7-dimethyloctanal, 2-Methyl-3-(4-tert.-butylphenyl)propanal oder 2,4-Dimethyl-3-cyclohexencarbaldehyd; 6-Isopropylchinolin; 6-Isobutylchinolin; 6-sec.-Butylchinolin; Indol; Skatol; 2-Methoxy-3-isopropylpyrazin; 2-Isobutyl-3-methoxypyrazin;
der Phenole, Phenylether und Phenylester wie z.B. Estragol; Anethol; Eugenol; Eugenylmethylether; Isoeugenol; Isoeugenylmethylether; Thymol; Carvacrol; Diphenylether; beta-Naphthylmethylether; beta-Naphthylethylether; beta-Naphthylisobutylether; 1,4-Dimethoxybenzol; Eugenylacetat; 2-Methoxy-4-methylphenol; 2-Ethoxy-5-(1-propenyl)phenol; p-Kresylphenylacetat;
der heterocyclischen Verbindungen wie z.B. 2,5-Dimethyl-4-hydroxy-2H-furan-3-on; 2-Ethyl-4-hydroxy-5-methyl-2H-furan-3-on; 3-Hydroxy-2-methyl-4H-pyran-4-on; 2-Ethyl-3-hydroxy-4H-pyran-4-on;
der Lactone wie z.B. 1,4-Octanolid; 3-Methyl-1,4-octanolid; 1,4-Nonanolid; 1,4-Decanolid; 8-Decen-1,4-olid; 1,4-Undecanolid; 1,4-Dodecanolid; 1,5-Decanolid; 1,5-Dodecanolid; 1,15-Pentadecanolid; cis- und trans-11-Pentadecen-1,15-olid; cis- und trans-12-Pentadecen-1,15-olid; 1,16-Hexadecanolid; 9-Hexadecen-1,16-olid; 10-Oxa-1,16-hexadecanolid; 11-Oxa-1,16-hexadecanolid; 12-Oxa-1,16-hexadecanolid; Ethylen-1,12-dodecandioat; Ethylen-1,13-tridecandioat; Cumarin; 2,3-Dihydrocumarin; Octahydrocumarin.

Im Rahmen der vorliegenden Erfindung bevorzugt einzusetzende Aromastoffe sind ausgewählt aus der Gruppe bestehend aus:

Acetaldehyd, Acethylmethylcarbinol, Acetophenon, Allylcapronat, alpha Ionon, beta Ionon, Anisaldehyd, Anisylacetat, Anisylformiat, Benzaldehyd, Benzothiazol, Benzylacetat, Benzylacetat, Benzylalkohol, Benzylbenzoat, beta Ionon, Butylbutyrat, Buttersäure, Butylcapronat, Butylidenphthalid, Caprinsäure, Capronsäure, Caprylsäure, Carvon, Camphen Caryophyllen, Cineol, Cinnamylacetat, Citral, Citronellol, Citronellal, Citronellylacetat, Cyclohexylacetat, Cymol, Damascon, Decalacton, Diacetyl, Dihydrocumarin, Dimethylanthranilat, Dimethylanthranilat, Dodecalacton, Essigsäure, Ethoxyethylacetat, Ethylacetat, Ethylbuttersäure, Ethylbutyrat, Ethylcaprinat, Ethylcapronat, Ethylcrotonat, Ethylformiat, Ethylfuraneol, Ethylguajakol, Ethylisobutyrat, Ethylisovalerianat, Ethyllactat, Ethyllactat, Ethylmaltol, Ethylmethylbutyrat, Ethylpropionat, Eucalyptol, Eugenol, Ethylheptylat, Frambinon ®, gamma Decalacton, Geraniol, Geranylacetat, Geranylacetat, Grapefruitaldehyd, Hedion, Heliotropin, 2-Heptanon, 3-Heptanon, 4-Heptanon, trans-2- Heptenal, cis-4-Heptenal, trans-2-Hexenal, cis-3-Hexenol, trans-2-Hexensäure, trans-3-Hexensäure, cis-2-Hexenylacetat, cis-3-Hexenylacetat, cic-3-Hexenylcapronat, trans-2-Hexenylcapronat,cis-3-Hexenylformiat, cis-2-Hexylacetat, cis-3-Hexylacetat, trans-2-Hexylacetat, cis-3-Hexylformiat, para-Hydroxybenzylaceton, Isoamylalkohol, Isoamylisovalerianat, Isobutylbutyrat, Isobutyraldehyd, Isoeugenolmethylether, Isopropylmethylthiazol, Laurinsäure, Leavulinsäure, Linalool, Linalooloxid, Linalylacetat, Maltol, Menthol, Menthofuran, Methylanthranilat, Methylbutanol, Methylbuttersäure, 2-Methylbutylacetat, Methylcapronat, Methylcinnamat, 5-Methylfurfural, 3,2,2-Methylcyclopentenolon, 6,5,2-Methylheptenon, Methyldihydrojasmonat, Methyljasmonat, 2-Methylmethylbutyrat, 2-Methyl-2-Pentenolsäure, Methylthiobutyrat, 3,1-Methylthiohexanol, 3-Methylthiohexylacetat, Nerol, Nerylacetat, trans,trans,2,4-Nonadienal, 2,4-Nonadienol, 2,6-Nonadienol, 2,4-Nonadienol, Nootkaton, delta Octalacton, gamma Octalacton, 2-Octanol, 3-Octanol, 1,3-Octenol, 1-Octylacetat, 3-Octylacetat, Palmitinsäure, Paraldehyd, Phellandren, Pentandion, Phenylethylacetat, Phenylethylalkohol, Phenylethylalkohol, Phenylethylisovalerianat, Piperonal, Propionaldehyd, Propionsäure, Propylbutyrat, Pulegon, Pulegol, Sinensal, Sulfurol, Terpinen, Terpineol, Terpinolen, 8,3-Thiomenthanon, 4,4,2-Thiomethylpentanon, Thymol, delta Undecalacton, gamma Undecalacton, Valencen, Valeriansäure, Vanillin, Acetoin, Ethylvanillin, Ethylvanillinisobutyrat (= 3-Ethoxy-4-isobutyryloxybenzaldehyd), Furaneol® (2,5-Dimethyl-4-hydroxy-3(2H)-furanon) und dessen Abkömmlinge (dabei vorzugsweise Homofuraneol (= 2-Ethyl-4-hydroxy-5-methyl-3(2H)-furanon), Homofuronol (= 2-Ethyl-5-methyl-4-hydroxy-3(2H)-furanon und 5-Ethyl-2-methyl-4-hydroxy-3(2H)-furanon), Maltol und Maltol-Abkömmlinge (dabei vorzugsweise Ethylmaltol), Cumarin und Cumarin-Abkömmlinge, gamma-Lactone (dabei vorzugsweise gamma-Undecalacton, gamma-Nonalacton, gamma-Decalalcton), delta-Lactone (dabei vorzugsweise 4-Methyldeltadecalacton, Massoilacton, Deltadecalacton, Tuberolacton), Methylsorbat, Divanillin, 4-Hydroxy-2(oder 5)-ethyl-5(oder 2)-methyl-3(2H)furanon, 2-Hydroxy-3-methyl-2-cyclopentenon, 3-Hydroxy-4,5-dimethyl-2(5H)-furanon, Essigsäureisoamylester, Buttersäureethylester, Buttersäure-n-butylester, Buttersäureisoamylester, 3-Methylbuttersäureethylester, n-Hexansäureethylester, n-Hexansäureallylester, n-Hexansäure-n-butylester, n-Octansäureethylester, Ethyl-3-methyl-3-phenylglycidat, Ethyl-2-trans-4-cis-decadienoat, 4-(p-Hydroxyphenyl)-2-butanon, 1,1-Dimethoxy-2,2,5-trimethyl-4-hexan, 2,6-Dimethyl-5-hepten-1-al und Phenylacetaldehyd, 2-Methyl-3-(methylthio)furan, 2-Methyl-3-furanthiol, bis(2-Methyl-3-furyl)disulfid, Furfurylmercaptan, Methional, 2-Acetyl-2-thiazolin, 3-Mercapto-2-pentanon, 2,5-Dimethyl-3-furanthiol, 2,4,5-Trimethylthiazol, 2-Acetylthiazol, 2,4-Dimethyl-5-ethylthiazol, Mercapto-3-methyl-1-butanol 2-Acetyl-1-pyrrolin, 2-Methyl-3-ethylpyrazin, 2-Ethyl-3,5-dimethylpyrazin, 2-Ethyl-3,6-dimethylpyrazin, 2,3-Diethyl-5-methylpyrazin, 3-Isopropyl-2-methoxypyrazin, 3-Isobutyl-2-methoxypyrazin, 2-Acetylpyrazin, 2-Pentylpyridin, (E,E)-2,4-Decadienal, (E,E)-2,4-Nonadienal, (E)-2-Octenal, (E)-2-nonenal, 2-Undecenal, 12-Methyltridecanal, 1-Penten-3-on, 2,3-Butandion, 4-Hydroxy-2,5-dimethyl-3(2H)-furanon, Guajakol, 3-Hydroxy-4,5-dimethyl-2(5H)-furanon, 3-Hydroxy-4-methyl-5-ethyl-2(5H)-furanon, Dimethylsulfid, Trimethylamin, Zimtaldehyd, Zimtalkohol, Methylsalicylat, Isopulegol sowie weitere hier nicht genannte Stereoisomere, Enantiomere, Stellungsisomere, Diastereomere, cis/trans-Isomere bzw. Epimere dieser Substanzen.

Im Rahmen der vorliegenden Erfindung besonders bevorzugt einzusetzende Aromazubereitungen umfassen oder bestehen aus einem Zitrus-Aromastoff (oder einem Aromastoff mit ähnlichen Aromaeigenschaften), durch dessen Einsatz in einem erfindungsgemäßen Verfahren bzw. einer erfindungsgemäßen Verwendung der Zitrusaromagehalt der besagten intakten, vereinzelten Zitrussaftschläuche gegenüber dem natürlicherweise in den Zitrussaftschläuchen vorliegenden Zitrusaromagehalt erhöht wird. Dadurch kann ein besonders intensiver, natürlicher Aromaeindruck geschaffen oder verstärkt werden.

Bevorzugte erfindungsgemäße Mischungen umfassen entsprechend einen Gehalt an Zitrusaromen von 50 ppm (0,005 Gew.-%) oder mehr, vorzugsweise von 500 ppm (0,05 Gew.-%) oder mehr, vorzugsweise 1000 ppm (0,1 Gew.-%) oder mehr.

Der Anteil an zugesetztem Zitrusaroma an dem Aroma-Gesamtgewicht der besagten Zitrussaftschläuche beträgt in bevorzugten erfindungsgemäßen Mischungen 50 Gew.-% oder mehr.

Erfindungsgemäß einzusetzende flüssige Aromazubereitungen können, wie bereits oben ausgeführt, Aromalösungsmittel umfassen. Eingesetzt werden im Rahmen der vorliegenden Erfindung vorzugsweise für den Menschen zum Verzehr geeignete Lösungsmittel für Aromastoffe. Bevorzugte Aromalösungsmittel sind insoweit Ethanol, fette Öle, beispielsweise Speiseöle und insbesondere Pflanzenöle wie beispielsweise Borretschöl, Distelöl, Erdnussöl, Haselnussöl, Kokosöl, Kürbiskernöl, Leinöl, Maiskeimöl, Makadamianussöl, Mandelöl, Olivenöl, Pekannussöl, Pistazienkernöl, Rapsöl, Reiskeimöl, Sesamöl, Sojaöl, Sonnenblumennöl, Walnussöl oder Weizenkeimöl, fraktionierte Kokosöle, die hauptsächlich Fettsäurereste mit einer Länge von sechs bis acht Kohlenstoffatomen (C6-C8-Fettsäuren) aufweisen, Propylenglykol, Diacetin (Glycerindiacetat), Triacetin (Glycerintriacetat), Benzylalkohol, Triethylcitrat, Ethyllactat, Isopropanol und Glycerin.

Der Begriff "intakte, vereinzelte Zitrussaftschläuche" bezeichnet Zitrussaftschläuche, die sowohl intakt (wie nachfolgend definiert) als auch vereinzelt (wie nachfolgend definiert) sind.

Der Begriff "vereinzelte Zitrussaftschläuche" bezeichnet Zitrussaftschläuche, die aus entsprechenden Zitrusfruchtsegmenten herausgetrennt wurden und unabhängig von denjenigen Zitrussaftschläuchen bewegt werden können, die im ursprünglichen Zitrusfrucht-Segment an sie angrenzten. Vereinzelte Zitrussaftschläuche sind insbesondere dann, wenn sie gemäß üblicher Trennverfahren vereinzelt wurden, regelmäßig frei von anderen Bestandteilen der Zitrusfrucht.

Da Zitrussaftschläuche üblicherweise in technischen Verfahren vereinzelt werden, ist es möglich, dass ein gewisser Anteil von Zitrussaftschläuchen auch nach Durchführung des Verfahrens noch nicht vollständig vereinzelt vorliegt, sondern in Form zusammengelagerter Haufen mit einer Schlauchanzahl von 2 bis 40, bevorzugt 2 bis 20 und besonders bevorzugt 2 bis 5. Dementsprechend kann eine erfindungsgemäße Mischung neben vereinzelten (vorzugsweise intakten) Zitrussaftschläuchen auch derartige Haufen von Zitrussaftschläuchen umfassen. Der Anteil vereinzelter Zitrussaftschläuche in einer derartigen Mischung sollte jedoch, wie oben bereits in anderem Zusammenhang ausgeführt, zumindest bezogen auf die Gesamtmenge der Zitrussaftschläuche 50% oder mehr betragen, vorzugsweise 90% oder mehr, bevorzugt 95% oder mehr und besonders bevorzugt 99% oder mehr.

Der Begriff "intakte Zitrussaftschläuche" bezeichnet Zitrussaftschläuche mit einer intakten Schlauchbegrenzung (Schlauchhülle; Epidermis). Eine Schlauchbegrenzung (Schlauchhülle) ist dann intakt, wenn sie den Schlauchinhalt (Saft) vollständig und lückenlos umschließt und somit vor dem Auslaufen schützt. Intakte Zitrussaftschläuche enthalten in der äußeren Schlauchhülle keine relevanten Fehlstellen, wie sie etwa durch mechanische Einwirkung (besonders Zerreißen, Schnitt, Zerdrücken) oder durch das Gefrieren und Auftauen hervorgerufen werden können. Bei einer intakten Schlauchhülle kann eine Osmose durchgeführt werden. Wird ein Zitrussaftschlauch mit intakter Hülle in eine (äußere) Flüssigkeit eingetaucht, bleiben der im Inneren des Zitrussaftschlauches vorhandene Saft und die äußere Flüssigkeit gut voneinander getrennt. Beim Eintauchen eines intakten Zitrussaftschlauches in eine Lösung mit einem geringen Anteil gelöster Bestandteile (z.B. destilliertes Wasser) diffundiert das Wasser durch die Schlauchhülle (semipermeable Membran) in das Schlauchinnere hinein, was letztlich zur Vergrößerung des Schlauchvolumens führt. Der resultierende Zitrussaftschlauch erscheint dann größer und fester. In wässrigen Lösungen mit hoher Konzentration gelöster Stoffe (z.B. Zuckersirup oder gesättigte Kochsalzlösungen) diffundiert Wasser aus dem intakten Zitrussaftschlauch in die Lösung; es resultiert ein verkleinertes Schlauchvolumen und der Schlauch erschlafft.

Sichere Anzeichen für das Vorhandensein eines nicht intakten Zitrussaftschlauches sind Bruchstellen, Schnittstellen oder Risse, die bereits mit dem bloßen Auge oder mit dem Mikroskop bei geringer Vergrößerung zu erkennen sind (Vergrößerung ca. 2- bis 100-fach). Manchmal sind auch größere Luftblasen in Zitrussaftschläuchen zu erkennen, welche einen nicht intakten Zitrussaftschlauch indizieren. Versteckte Fehlstellen lassen sich vielfach mittels eines Osmoseversuches aufdecken; versteckte Fehlstellen liegen vor, wenn sowohl wässrige Medien mit hohem Gehalt an gelösten Substanzen, als auch wässrige Medien mit niedrigem Gehalt an gelösten Substanzen keinen wesentlichen Einfluss auf das Volumen und die Festigkeit ausüben, da bereits ein direkter Stoffaustausch über die Fehlstellen stattfindet. Eine weitere Möglichkeit der Detektion nicht intakter Zitrussaftschläuche bietet die Anfärbung. Hierzu werden die Zitrussaftschläuche in eine wässrige Farblösung aus z.B. 0,1 % Carminrot (Lebensmittelfarbstoff E120) getaucht und nach etwa 15 Minuten Standzeit bei Raumtemperatur mit Wasser gewaschen. Intakte Zitrussaftschläuche erscheinen dann praktisch ungefärbt, während nicht intakte Zitrussaftschläuche aufgrund des Eintritts der Farbe in das Innere des Zitrussaftschlauches deutlich rot erscheinen.

Sofern in einer erfindungsgemäßen Mischung neben intakten (vereinzelten oder nicht vereinzelten) Zitrussaftschläuchen auch nicht intakte (vereinzelte oder nicht vereinzelte) Zitrussaftschläuche vorliegen, sollte, wie weiter oben bereits in anderem Zusammenhang ausgeführt, der zahlenmäßige Anteil der intakten Zitrussaftschläuche bezogen auf die Gesamtmenge der Zitrussaftschläuche zumindest 50% oder mehr betragen, vorzugsweise 65% oder mehr und besonders bevorzugt 85% oder mehr.

Weiter oben wurden bereits die Schritte genannt, welche ein erfindungsgemäßes Verfahren zur Herstellung einer erfindungsgemäßen Mischung auszeichnen. Es sind dies die Schritte:
a) Bereitstellen intakter, vereinzelter Zitrussaftschläuche, und
b) Kontaktieren der Zitrussaftschläuche mit einer oder mehreren flüssigen Aromazubereitungen, so dass der Aromagehalt der Zitrussaftschläuche erhöht wird.
Ferner wurde bereits ausgeführt, dass in einem bevorzugten erfindungsgemäßen Herstellverfahren der folgende weitere Schritt durchgeführt wird:
c) Gefrieren der gemäß Schritt b) erhaltenen Zitrussaftschläuche mit Aromazusatz, in An- oder Abwesenheit des oder der flüssigen Aromazubereitungen.

Schritt a) des erfindungsgemäßen Verfahrens (insbesondere in einer seiner bevorzugten Ausgestaltungen) umfasst hierbei vorzugsweise die Vereinzelung der Zitrussaftschläuche ausgehend von ganzen oder geschälten Zitrusfrüchten oder Zitrusfruchtsegmenten. Insbesondere können die Verfahren bzw. die Apparaturen gemäß GB 978418, US 3,246,993, US 4738194 sowie JP 62000262 eingesetzt werden. Insbesondere eignen sich auch Vereinzelungsverfahren beziehungsweise entsprechende Apparaturen, bei denen die Zitrussaftschläuche mit Hilfe von Flüssigkeitsstrahlen vereinzelt werden. Beispiele hierzu finden sich in den Dokumenten US 4,294,861 und JP 57150373. In bevorzugten Ausgestaltungen des Schrittes a) eines erfindungsgemäßen Verfahrens werden Zitrusfrüchte halbiert und ein Flüssigkeitsstrahl auf die Schnittfläche gerichtet, so dass Zitrussaftschläuche herausgespült und vereinzelt werden. Gemäß einer alternativen Ausgestaltung des Schrittes a) werden die Früchte geschält, in einzelne Segmente unterteilt und diese Segmente mit einem Flüssigkeitsstrahl behandelt. Es werden wiederum Zitrussaftschläuche herausgespült, welche dann z.B. mit Hilfe eines Trennnetzes von den sonstigen Überresten der Frucht getrennt werden. Weiter alternativ lässt sich das Verfahren gemäß US 4,560,572 einsetzten. Hierbei werden die Zitrusfrüchte geschält und in einzelne Segmente getrennt. Gegebenenfalls findet ein extra-gastrischer Abbau statt. Die Segmente werden schließlich durch ausgleichende Flüssigkeitsströme zu einzelnen Saftschläuchen vereinzelt. Ausgleichende Flüssigkeitsströme werden beispielsweise durch entgegengerichtete Strömungen erzeugt. Die ausgleichenden Strömungen zwischen diesen entgegengesetzt gerichteten Strömungen und die dabei auftretenden Kräfte führen zur Vereinzelung der Zitrussaftschläuche. Zur Vereinzelung von Zitrussaftschläuchen können gegebenenfalls geschälte Früchte auch in einer kryogenen Flüssigkeit bei Temperaturen unterhalb von - 80° C schockgefrostet werden. Während die Früchte in diesem tiefgefrorenen Zustand vorliegen, werden sie durch Bewegung oder durch einen mechanischen Einfluss (Schlag, Prall, Brechen, Walzen) in die einzelnen Saftschläuche getrennt. Die Zitrussaftschläuche werden anschließend von den restlichen Bestandteilen der Frucht getrennt, z.B. durch Sieben.

Sofern in Schritt a) des erfindungsgemäßen Verfahrens ein Vereinzelungsverfahren angewendet wird, bei dem die Zitrusfrucht bzw. die Zitrussaftschläuche mit Wasser behandelt werden, sollte verbliebenes Restwasser vor Durchführung des Schrittes b) von den nunmehr vereinzelten Zitrussaftschläuchen abgetrennt werden. Die Abtrennung des Wassers sollte möglichst vollständig erfolgen, beispielsweise durch das Ablaufenlassen über Sieben o.ä. und die anschließende Ausbreitung der vereinzelten Zitrussaftschläuche auf Tüchern (z.B. aus Baumwolle oder Leinen). Auch das Ablaufenlassen über entsprechend gehalterten bzw. gespannten Tüchern ist möglich, wobei die vorherige Verwendung von Sieben nicht notwendig ist. Im Einzelfall genügt es auch, das Wasser nur durch Siebe ablaufen zu lassen. Wird das nach dem Vereinzelungsprozess anhaftende Wasser vollständig entfernt, kann es sich nicht in Folgeschritten (z.B. einem nachfolgenden Gefrierschritt c)) nachteilig auswirken.

In einem erfindungsgemäßen Schritt b) werden die Zitrussaftschläuche mit einer oder mehreren flüssigen Aromazubereitungen kontaktiert, so dass der Aromagehalt der Zitrussaftschläuche erhöht wird. Wie bereits erwähnt, wird dieser Schritt b) vorzugsweise so durchgeführt, dass einer, mehrere oder sämtliche Aromastoffe aus der oder den flüssigen Aromazubereitungen in die Zitrussaftschläuche aufgenommen werden, vorzugsweise in den umhüllten Saft der Zitrussaftschläuche.

Um die Aufnahme von einem oder mehreren Aromastoffen in den umhüllten Saft der Zitrussaftschläuche zu erreichen, wird bei Durchführung des Schrittes b) eines erfindungsgemäßen Verfahrens vorzugsweise ein Mischungsschritt durchgeführt, in dem die Zitrussaftschläuche mit der einen oder den mehreren Aromazubereitungen so vermischt werden, dass die dabei entstehende Mischung (umfassend Zitrussaftschläuche und eine oder mehrere Aromazubereitungen) bezogen auf das Gesamtgewicht der Mischung 0,5-99,5 Gew.-% Aromazubereitung und 99,5-0,5 Gew.-% Zitrussaftschläuche umfasst.

Bevorzugt ist ein Verfahren, wobei die in Schritt b) entstehende Mischung, umfassend Zitrussaftschläuche und eine oder mehrere Aromazubereitungen, bezogen auf das Gesamtgewicht der Mischung 2 bis 70 Gew.-%, vorzugsweise 5 bis 60 Gew.-%, Aromazubereitungen und 98 bis 30 Gew.-%, vorzugsweise 95 bis 40 Gew.-%, Zitrussaftschläuche umfasst.

Bei Durchführung des Schrittes b) sollte darauf geachtet werden, dass vorzugsweise die gesamte Oberfläche sämtlicher zu behandelnder Zitrussaftschläuche mit der bzw. den flüssigen Aromazubereitungen kontaktiert wird. Durch das Kontaktieren wird in bevorzugten Ausgestaltungen des erfindungsgemäßen Verfahrens ein Überzug erreicht, wobei sich als Überzugsverfahren insbesondere das Tauchen und das Mischen in rotierenden Ausrüstungen eignen. Beim Tauchen werden zum Erreichen eines vollständigen Überzugs (eines Kontaktierens der gesamten Zitrussaftschlauchoberfläche) die intakten, vereinzelten Zitrussaftschläuche vollständig in die entsprechende Aromazubereitung getaucht. Die Tauchzeit wird dabei entsprechend den Bedürfnissen des Einzelfalles zwischen einigen Sekunden und etwa 24 Stunden betragen, wobei das Tauchbad in einer Vielzahl von Fällen eine Temperatur von 0 bis 60 °C besitzt. Nach ausreichender Tauchzeit werden die Zitrussaftschläuche aus dem Tauchbad entfernt und üblicherweise weitgehend von der Aromazubereitung getrennt, z.B. durch Ablaufenlassen der Aromazubereitung durch ein Sieb. Das eingesetzte Tauchbad kann zum Überziehen weiterer Mengen an Zitrussaftschläuchen erneut verwendet werden.

Zum Mischen in rotierenden Ausrüstungen können Dragiertrommeln eingesetzt werden. Diese erlauben es, den Aromaeinsatz im Vergleich zum Tauchverfahren erheblich zu reduzieren. In Dragiertrommeln können üblicherweise Mischungen aus 0,5-20 Gew.-% Aromazubereitung und 80-99,5 Gew.-% Zitrussaftschläuchen verarbeitet werden. Die einzusetzende Aromazubereitung kann z.B. auf die Zitrussaftschläuche aufgesprüht oder aufgetropft werden. Die Verweilzeiten in der Dragiertrommel können sehr kurz sein und z.B. lediglich 2-30 Minuten betragen, oder aber bis zu einige Stunden betragen.

Es sei noch darauf hingewiesen, dass in Schritt b) des erfindungsgemäßen Verfahrens die Aromazubereitung zumindest die Oberfläche der Zitrussaftschläuche benetzen sollte.

Vorteilhafter als eine bloße Benetzung der Oberfläche ist es jedoch, wenn einzelne, mehrere oder sämtliche Aromastoffe der Aromazubereitung in die Hülle der Zitrussaftschläuche eindringen, und ganz besonders bevorzugt ist es, wenn einzelne, mehrere oder sämtliche Aromastoffe der Aromazubereitung durch die Hülle hindurch bis in den umhüllten Saft der Zitrussaftschläuche vordringen, so dass schließlich ein Teil der Aromastoffe in der Hülle und ein weiterer Teil im Saft zu finden ist.

In Schritt b) des erfindungsgemäßen Verfahrens sollten die gemäß Schritt a) bereitgestellten intakten, vereinzelten Zitrussaftschläuche in nicht gefrorenem Zustand eingesetzt werden.

In bevorzugten Verfahrensgestaltungen wird nach Schritt b) der Überschuss des einen bzw. der mehreren Aromazubereitungen von den behandelten Zitrussaftschläuchen entfernt. Vorzugsweise erfolgt die Entfernung dieses Überschusses vor Durchführung des Schrittes c) in bevorzugten Ausgestaltungen eines erfindungsgemäßen Verfahrens.

Es versteht sich, dass im Bedarfsfalle der Schritt b) eines erfindungsgemäßen Verfahrens wiederholt durchgeführt werden sollte, z. B. um die Beladung eines Zitrussaftschlauches mit verschiedenen Aromastoffen zu erreichen, welche in unterschiedlichen Aromazubereitungen vorliegen. Vorzugsweise werden dann vor Durchführung des zweiten Schrittes b) die nach Durchführung des ersten Kontaktierungsschrittes b) noch an den Zitrussaftschläuchen anhaftenden Reste flüssiger Aromazubereitung entfernt. Die im zweiten Schritt b) eingesetzten Aromazubereitungen werden dann vorzugsweise ebenfalls (und vorzugsweise vor Durchführung des Schrittes c)) entfernt. Gleiches gilt für eine dritte oder jede weitere Durchführung des Schrittes b).

Schritt c) eines bevorzugten erfindungsgemäßen Verfahrens umfasst das Gefrieren der gemäß Schritt b) erhaltenen Zitrussaftschläuche mit Aromazusatz in An- oder Abwesenheit des oder der flüssigen Aromazubereitungen. Bevorzugt ist es insoweit, wenn die Zitrussaftschläuche vor dem Gefrieren von Resten anhaftender flüssiger Aromazubereitungen gereinigt werden, d.h. wenn der Überschuss des einen oder der mehreren Aromazubereitungen vor Durchführung des Schrittes c) entfernt wird.

Das Gefrieren der Zitrussaftschläuche in Schritt c) kann zwar generell bei Temperaturen bis zu -250° C erfolgen, wird jedoch vorzugsweise bei einer Temperatur im Bereich zwischen der Gefriertemperatur der Zitrussaftschläuche und einer Temperatur oberhalb von -73° C durchgeführt, vorzugsweise bei einer Temperatur im Bereich von -15 bis -40° C. Die bevorzugten Ausgestaltungen eines erfindungsgemäßen Verfahrens unterscheiden sich durch die Wahl des Temperaturbereiches zum Gefrieren deutlich vom Stand der Technik (vgl. insbesondere US 3,246,993 und GB 978418). In bevorzugten erfindungsgemäßen Verfahren wird es in Kauf genommen, dass der Gefriervorgang recht lange dauert, so dass sich nur sehr wenige Wasserkristalle bilden. Während nach bisherigem Verständnis davon auszugehen gewesen wäre, dass diese wenigen Wasserkristalle zu sehr großen Kristallen heranwachsen und zu einer Zerstörung der Schlauchhüllen führen (vgl. insoweit US 3,246,993), haben eigene Untersuchungen zum erfindungsgemäßen Verfahren ein solches Phänomen überraschenderweise nicht gezeigt. Es sei insoweit bereits an dieser Stelle auf die weiter unten folgenden Beispiele 1 und 2 verwiesen. Die im Rahmen der vorliegenden Erfindung bevorzugten Temperaturen zum Gefrieren lassen sich mit einfacher Gefriertechnik (Froster, Gefrierer) erreichen; entsprechende Anlagen sind in der Anschaffung sowie im Betrieb sehr wirtschaftlich. Beispiele geeigneter Gefriergeräte sind Plattenfroster, Kaltluftfroster, Gefrierschrank, Gefriertunnel, Bandfroster, Spiralbandfroster, Gefrierlager, Gefrierzellen, Gefrierhäuser und Gefrierer. Das Gefrieren kann innerhalb eines Zeitraums von wenigen Minuten (etwa 2 Minuten) bis zu einigen Stunden (etwa 48 Stunden) erfolgen, wobei die Temperatur der Zitrussaftschläuche vorzugsweise kleiner sein sollte als -15°C.

Während des Gefrierens können sich die Zitrussaftschläuche im unverpackten Zustand befinden; vorzugsweise liegen sie jedoch bereits während des Gefriervorganges in einer Verpackung vor. Hierdurch erfahren sie einen Schutz vor dem Austrocknen und sind somit nach dem Auftauen voll gefüllt.

Vorzugsweise wird Schritt b) eines erfindungsgemäßen Verfahrens so durchgeführt, dass die resultierenden Zitrussaftschläuche mit Aromazusatz gefrier- und/oder auftaustabilisiert sind. Insgesamt resultiert bei geeigneter Verfahrensgestaltung eine erhöhte Lagerstabilität der erfindungsgemäßen Mischungen. Tiefgekühlte erfindungsgemäße Zitrussaftschläuche besitzen eine Haltbarkeit von mehreren Monaten bis zu einigen Jahren, wobei in einer Vielzahl von Fällen die Haltbarkeit im Bereich zwischen 6 Monaten und 2 Jahren liegt. Zitrussaftschläuche mit Aromazusatz sind dann gefrier- bzw. auftaustabilisiert, wenn sie während des Gefriervorganges bzw. Auftauvorganges intakt bleiben. Zwar sind die Wirkmechanismen, welche zu einer Gefrier- und/oder Auftaustabilisierung der auf erfindungsgemäße Weise hergestellten Zitrussaftschläuche führen noch nicht abschließend geklärt. Vermutlich basiert die Wirkung jedoch darauf, dass durch das oder parallel zum Eindringen von Aromastoffen in den Zitrussaftschlauch der Wasseranteil in den Hüllen des Zitrussaftschlauches reduziert wird, so dass die schädlichen Auswirkungen des Wassers minimiert werden. Insbesondere scheint in einem Gefrierschritt c) in den Schlauchhüllen bzw. an deren Oberfläche keine Kristallisation des (restlichen) Wassers stattzufinden, so dass die Schläuche aus diesem Grunde intakt bleiben.

In bevorzugten Verfahrensgestaltungen sind nach Schritt a) und b) die vorliegenden Zitrussaftschläuche nicht gefroren.

Nachfolgend wird die Erfindung anhand von Beispielen näher erläutert.

### Beispiel 1: Mischung umfassend Saftschläuche von Valencia Late mit Aromazusatz

Eine Orange (Valencia Late) wird geschält und in einzelne Segmente geteilt. Bei jedem Segment wird mit einem scharfen Messer vorsichtig die Haut geöffnet. Die Segmente werden nach außen überstreckt, sodass sich die Zitrussaftschläuche auflockern. Die vorbehandelten Segmente werden in ein 2 Liter Becherglas gegeben und mit einem Wasserstrahl behandelt. Hierzu wird ein flexibler Kunststoffschlauch mit einem Innendurchmesser von 7 mm an eine Wasserleitung angeschlossen und die Schlauchöffnung durch Druck mit den Fingern verengt. Der Strahl wird am Rand in das Becherglas gerichtet, sodass die vorbehandelten Orangensegmente annähernd eine Kreisbewegung ausführen. Das Becherglas füllt sich zunehmend und beginnt überzulaufen. Die im übergelaufenen Wasser mitgeführten vereinzelten Zitrussaftschläuche werden mit Hilfe eines Siebes aufgefangen. Das Wasser wird durch das Sieb ablaufen gelassen. Die gewonnnen Saftschläuche sind überwiegend (>95 %) intakt und überwiegend (>99 %) vereinzelt.

15 g der Zitrussaftschläuche werden in 15 g Orangenschalenöl (Aromazubereitung) gelegt und bei -18 °C für 24 Stunden in den Tiefkühlschrank gestellt. Nach dem Herausnehmen werden die tiefgefrorenen Saftschläuche vom Oranenschalenöl abgesiebt und anschließend bei Raumtemperatur aufgetaut.

Die aufgetauten Zitrussaftschläuche sind noch immer intakt (> 95%) und prall mit Saft gefüllt. Ausgetretener Saft kann nicht beobachtet werden. Beim Verkosten entspricht die Textur weitestgehend der Textur der nicht gefrorenen Zitrussaftschläuche. Bei leichtem Druck mit der Zunge auf den Zitrussaftschläuche spritzt der Saft in den Mundraum. Die Zitrussaftschläuche schmecken dabei angenehm aromatisiert. Die Analyse des Aromagehaltes ergab einen Wert von 4086 ppm.

### Beispiel 2 (vergleichendes Beispiel)

Beispiel 1 wird wiederholt, wobei die Zitrussaftschläuche vor dem Gefrieren nicht in das Orangenschalenöl gelegt werden. Nach dem Auftauen sind gemäß mikroskopischer Betrachtung zumindest 90 % der Zitrussaftschläuche defekt, d.h. nicht mehr intakt, und es ist ein Großteil des Saftes ausgetreten. Die wenigen bei mikroskopischer Betrachtung noch intakt erscheinenden Zitrussaftschläuche sind nicht prall mit Saft gefüllt und erscheinen eher schlaff, sind also vermutlich ebenfalls nicht intakt. Beim Verkosten fehlt die typische Textur der intakten Zitrussaftschläuche. Die Analyse des Aromagehalts ergab einen Wert von lediglich 15 ppm.

Aus dem Vergleich von Beispiel 1 und Beispiel 2 wird vor allem die positive Wirkung des Aromazusatzes auf die Textur und die Integrität der Zitrussaftschläuche deutlich. Die Aromatisierung der Zitrussaftschläuche führt nicht nur zu einer Erhöhung des Aromagehalts, sondern steigert zusätzlich und unerwartet die Resistenz der Zitrussaftschläuche gegenüber dem Gefrier- und Auftauvorgang. Nach dem bisherigen Stand der Technik lassen sich intakte, vereinzelte Zitrussaftschläuche nur beim Gefrieren unterhalb von -73 °C erzielen. Im Beispiel 1 gelang hingegen die Herstellung gefrier- und auftaustabiler Saftschläuche bei lediglich -18 °C.

### Beispiel 3: Mischung umfassend Saftschläuche von Grapefruit mit Aromazusatz

Die Zitrussaftschläuche einer Grapefruit werden nach der in Beispiel 1 beschriebenen Prozedur vereinzelt. 100 g der vereinzelten Zitrussaftschläuche werden in 100 g Grapefruitessenzöl (als Aromazubereitung) getaucht und für 24 Stunden bei Raumtemperatur stehengelassen. Das Grapefruitessenzöl wird mittels eines Siebes abgetrennt und die Zitrussaftschläuche bei -18 °C gefroren. Nach dem Auftauen bleiben die Grapefruitsaftschläuche intakt. Die Textur entspricht beim Verkosten annähernd der Textur der unbehandelten und intakten Zitrussaftschläuche, wobei ein angenehm starker Aromaeindruck wahrgenommen wird.

### Beispiel 4: Mischung umfassend Saftschläuche von Grapefruit mit Aromazusatz

Die Zitrussaftschläuche einer Grapefruit werden nach der in Beispiel 1 beschriebenen Prozedur vereinzelt. 100 g der vereinzelten Zitrussaftschläuche werden für 15 Minuten in einer Dragiertrommel bei 15 U/min mit 10g Grapefruitessenzöl vermischt und anschließend bei -18 °C tiefgefroren.

### Beispiel 5: Mischung umfassend Saftschläuche von Grapefruit mit Aromazusatz

Eine Grapefruit wird mit einem Messer in 2 Hälften geschnitten und mit dem Wasserstrahl aus Beispiel 1 behandelt. Die vereinzelten Zitrussaftschläuche werden in einer Dragiertrommel mit 5 g einer Aromazubereitung, hier natürlichem Vanilleextrakt überzogen und bei -18 °C gefroren.

### Beispiel 6: Reisgericht umfassend aromatisierte Grapefruitsaftschläuche

Beispiel 5 wird wiederholt, wobei anstelle des Vanilleextraktes eine Korianderaromazubereitung verwendet wird. 2 g der tiefgefrorenen mit Korianderaroma aromatisierten Zitrussaftschläuche werden einem fertigen Reisgericht (100 g) beigemengt.

### Beispiel 7: Sorbet umfassend aromatisierte Grapefruitsaftschläuche

Eine Sorbetmasse wird aus 19 % Zucker, 5 % Glucosesirup, 0,4 % Aufschlagmittel, 0,5 % Zitronensäure und 75,1 % Wasser hergestellt und auf 4 °C abgekühlt. Zu 90 g dieser Masse werden 10 g der Zitrussaftschläuche aus Beispiel 4 gegeben und vorsichtig untergehoben. Die Masse wird bei -18 °C gefroren.

Beim Verzehr des Sorbets ergibt sich durch die erfindungsgemäßen Zitrussaftschläuche eine angenehme Textur. Beim Zerbeißen oder beim Zerdrücken der Zitrussaftschläuche zwischen Zunge und Gaumen wird ein starker Aromaeindruck wahrgenommen.

### Beispiel 8: Reisnudelgericht umfassend Zitrussaftschläuche mit Rindaroma

Tiefgefrorene intakte, vereinzelte Zitrussaftschläuche mit Rindaroma-Zusatz (1 Gew.-%) werden einem Gericht mit Reisnudeln (Kritharaki) beigemischt.

### Beispiel 9: Joghurt umfassend aromatisierte Grapefruitsaftschläuche

Die mit Vanille aromatisierten Zitrussaftschläuche aus Beispiel 5 werden einem cremig gerührten Joghurt beigemischt (5 g / 100 g Joghurt).

### Beispiel 10 (Analysenbeispiel)

Zitrussaftschläuche von Orangen werden analog Beispiel 1 vereinzelt. Die intakten, vereinzelten Zitrussaftschläuche werden in die gleiche Menge d-Limonen (als Aromazubereitung) getaucht und bei Raumtemperatur stehengelassen. Nach bestimmten Zeitabständen werden Proben (eine Anzahl von Zitrussaftschläuchen) entnommen, auf einem Sieb mit kaltem Wasser gewaschen und anschließend ihr Limonengehalt bestimmt. Die Ergebnisse sind in der folgenden Tabelle dargestellt.

| Zeit | Limonengehalt |
|---|---|
| 1 Stunde | 0,9% |
| 3 Stunden | 1,8% |
| 7 Stunden | 2,1% |
| 24 Stunden | 2,6% |

Die Ergebnisse zeigen den zeitlichen Verlauf der Aromastoffaufnahme in die Zitrussaftschläuche. Bereits nach 3 Stunden sind die Zitrussaftschläuche in hohem Maße mit d-Limonen angereichert, eine verlängerte Standzeit führt nur noch zu einer sehr langsamen Aromastoffaufnahme.

## Patentansprüche

1. Mischung umfassend oder bestehend aus intakten, vereinzelten Zitrussaftschläuchen mit Aromazusatz, wobei diese Zitrussaftschläuche bezogen auf ihr Gesamtgewicht
- einen Aromagehalt von 50 ppm (0,005 Gew.-%) oder mehr besitzen.

2. Mischung nach Anspruch 1, wobei die intakten, vereinzelten Zitrussaftschläuche mit Aromazusatz bezogen auf ihr Gesamtgewicht
- einen Aromagehalt von 500 ppm (0,05 Gew.-%) oder mehr, vorzugsweise 1000 ppm (0,1 Gew.-%) oder mehr besitzen.

3. Mischung nach Anspruch 1 oder 2, wobei der Anteil des Aromazusatzes an dem Aroma-Gesamtgewicht der besagten Zitrussaftschläuche 50 Gew.-% oder mehr beträgt.

4. Mischung nach einem der Ansprüche 1 bis 3, wobei die darin enthaltenen Zitrussaftschläuche mit Aromazusatz gefroren sind.

5. Mischung nach einem der Ansprüche 1 bis 5, weiter umfassend eine Anzahl von nicht-intakten und/oder nicht vereinzelten Zitrussaftschläuchen,
- wobei der zahlenmäßige Anteil der vereinzelten, intakten oder nicht intakten Zitrussaftschläuche bezogen auf die Gesamtmenge der Zitrussaftschläuche 50 % oder mehr beträgt, vorzugsweise 90 % oder mehr, vorzugsweise 95 % oder mehr und besonders bevorzugt 99 % oder mehr
und/oder
- der zahlenmäßige Anteil der intakten, vereinzelten oder nicht vereinzelten Zitrussaftschläuche bezogen auf die Gesamtmenge der Zitrussaftschläuche 50 % oder mehr beträgt, vorzugsweise 65 % oder mehr und besonders bevorzugt 85 % oder mehr.

6. Verwendung einer Mischung nach einem der vorangehenden Ansprüche als (a) Mittel zur Aromatisierung von der Ernährung oder dem Genuss dienenden Zubereitungen oder Halbfertigwaren oder (b) entsprechende Halbfertigware oder (c) der Ernährung oder dem Genuss dienende Zubereitung.

7. Verfahren zur Herstellung einer Mischung nach einem der Ansprüche 1 bis 5, mit folgenden Schritten:
a) Bereitstellen intakter, vereinzelter Zitrussaftschläuche, und
b) Kontaktieren der Zitrussaftschläuche mit einer oder mehreren flüssigen Aromazubereitungen, so dass der Aromagehalt der Zitrussaftschläuche erhöht wird.

8. Verfahren nach Anspruch 7, mit folgendem weiteren Schritt:
c) Gefrieren der gemäß Schritt b) erhaltenen Zitrussaftschläuche mit Aromazusatz, in An- oder Abwesenheit des oder der flüssigen Aromazubereitungen.

9. Verfahren nach einem der Ansprüche 7 bis 8, wobei Schritt b) so durchgeführt wird, dass einer, mehrere oder sämtliche Aromastoffe aus der oder den flüssigen Aromazubereitungen in die Zitrussaftschläuche aufgenommen werden, vorzugsweise in den umhüllten Saft der Zitrussaftschläuche.

10. Verfahren nach einem der Ansprüche 7 bis 9, wobei nach Schritt b) und vorzugsweise vor Schritt c) der Überschuss des einen bzw. der mehreren Aromazubereitungen entfernt wird.

11. Verfahren nach einem der Ansprüche 7 bis 10, wobei Schritt a) die Vereinzelung der Zitrussaftschläuche ausgehend von ganzen oder geschälten Zitrusfrüchten oder Zitrusfruchtsegmenten umfasst.

12. Verfahren nach einem der Ansprüche 7 bis 11, **dadurch gekennzeichnet, dass** das Kontaktieren der bereitgestellten Zitrussaftschläuche in Schritt b) durch Mischen der Zitrussaftschläuche mit der einen oder den mehreren Aromazubereitungen erfolgt, wobei die dabei entstehende Mischung, umfassend Zitrussaftschläuche und eine oder mehrere Aromazubereitungen, bezogen auf das Gesamtgewicht der Mischung 0,5 bis 99,5 Gew.% Aromazubereitungen und 99,5 bis 0,5 Gew.-% Zitrussaftschläuche umfasst.

13. Verfahren nach einem der Ansprüche 7 bis 12, wobei der Aromagehalt des umhüllten Saftes der in Schritt a) bereitgestellten Zitrussaftschläuche durch den gemäß Schritt b) erfolgenden Aromazusatz
- um 20 ppm oder mehr erhöht wird, vorzugsweise 50 ppm oder mehr, vorzugsweise um 100 ppm oder mehr, besonders bevorzugt um 250 ppm oder mehr
und/oder
- um 10 Gew.-% oder mehr, bezogen auf den Aromagehalt vor Aromazusatz, erhöht wird, vorzugsweise um 50 Gew.-% oder mehr, vorzugsweise um 100 Gew.-% oder mehr, besonders bevorzugt um 500 Gew.-% oder mehr.

14. Verfahren nach einem der Ansprüche 7 bis 13, wobei Schritt b) so durchgeführt wird, dass die resultierenden Zitrussaftschläuche mit Aromazusatz gefrier- und/oder auftaustabilisiert sind.

15. Verwendung einer Aromazubereitung als Mittel zur Erhöhung des Aromagehaltes des umhüllten Saftes eines Zitrussaftschlauches.
